# FASCICULE DE BREVET EUROPEEN

(11) **EP 2 138 698 B1**
(45) Date de publication et mention de la délivrance du brevet: **22.02.2012**
(21) Numéro de dépôt: 09163357.8
(22) Date de dépôt: 22.06.2009
(51) Int. Cl.: F02K 9/80

(54) **Dispositif pour amortir les efforts latéraux de décollement de jet agissant sur une tuyère de moteur-fusée**
Vorrichtung zur Abschwächung der seitlichen Druckbelastung beim Ablösen eines Jets, die auf die Düse eines Raketenmotors einwirkt
Device for absorbing the lateral forces of the jet flow separation acting on the nozzle of a rocket engine

(30) Priorité: 24.06.2008 FR 0854169
(43) Date de publication de la demande: 30.12.2009
(73) Titulaire: SNECMA, 75015 Paris (FR)
(72) Inventeur: Even, Philippe, 27620, Sainte Genevieve Les Gasny (FR); Beauverger, Philippe, 27950, Saint Just (FR); Branchet, Christelle, 27200, Vernon (FR); Millon, Frédérick, 27490 La Croix Saint Leffroy (FR)
(74) Mandataire: Boura, Olivier

(56) Documents cités:
- WO-A-01/94806
- US-A- 3 759 351
- US-A- 5 607 123
- US-B1- 6 282 887

## Description

### Arrière-plan de l'invention

La présente invention concerne les tuyères de moteurs-fusées, et plus particulièrement les tuyères destinées à être soumises à des phénomènes de décollement de jet générant des efforts latéraux importants.

Pour obtenir une impulsion spécifique élevée en altitude, les moteurs de fusée sont équipés de tuyères à grand rapport de section. En effet, pour un moteur donné, au cours d'une montée dans l'atmosphère, la pression ambiante va décroître, passant de la pression atmosphérique au niveau de la mer à une pression faible fonction de l'altitude. Les tuyères sont généralement optimisées en fonction des performances globales du lanceur, ce qui conduit à utiliser des tuyères sur-détendues dont la poussée sera maximale à une altitude dite "d'adaptation". Par conséquent, à la pression atmosphérique qui règne au niveau de la mer, la détente des gaz dans la tuyère est limitée par le phénomène de décollement du jet de la paroi du divergent.

Ce phénomène existe pendant toute une phase de vol comprise depuis le démarrage et jusqu'à l'altitude d'adaptation, qui peut être située par exemple à une dizaine de kilomètres du sol et à laquelle la poussée devient maximale en raison de la pression statique des gaz dans la section de sortie de la tuyère qui est alors égale à la pression ambiante qui est relativement faible. Pour toute cette phase de vol, la pression statique des gaz dans la section de sortie de la tuyère est très inférieure à la pression ambiante ce qui entraîne le phénomène de décollement du jet dans la tuyère qui disparaît à l'altitude d'adaptation. Le phénomène de décollement du jet existe également pendant une phase au sol d'arrêt du moteur.

Le décollement du jet est particulièrement important pendant les phases de démarrage ou d'arrêt au sol le cas échéant. En particulier, des risques existent que les efforts latéraux générés par le décollement de jet provoquent une rupture des attaches du moteur sur le lanceur pouvant conduire à des conséquences nuisibles voire catastrophiques pour le lanceur et la base de lancement (destruction du pas de tir, etc.).

Pour limiter les effets dus au décollement de jet, différents types de solutions ont déjà été proposées. L'une de ces solutions consiste à reprendre les efforts latéraux agissant sur le divergent au moyen des ensembles mécaniques de manoeuvre répartis autour de la tuyère. Avec de tels ensembles, en cas de décollement de jet, des vérins de pilotage transmettent au divergent une réaction d'appui de sens opposé à l'effort latéral généré sur le divergent. L'énergie apportée au divergent par le décollement de jet est transformée en énergie cinétique de basculement du moteur. Si le décollement de jet persiste en amplitude et en direction, la course maximale de l'ensemble de manoeuvre concernée est atteinte et vient en butée. Lors de cette mise en butée, la déformation élastique de l'ensemble de manoeuvre permet de dissiper l'énergie cinétique du moteur en énergie potentielle de déformation. Toutefois, si le niveau d'énergie à dissiper est trop important, les efforts lors de la mise en butée viennent à dépasser les limites des pièces concernées, entraînant leur rupture et éventuellement la destruction du lanceur sur le pas de tir.

Le document US-A-5 607 123 décrit un dispositif selon le préambule de la revendication 1. Le document WO 01/94806 décrit un amortisseur de vibrations basé sur l'utilisation d'élastomères.

### Objet et résumé de l'invention

La présente invention vise à remédier aux inconvénients précités en proposant un dispositif pour amortir les efforts latéraux de décollement de jet qui soit parfaitement fiable en toutes circonstances.

Ce but est atteint grâce à un dispositif pour amortir les efforts latéraux de décollement de jet agissant sur une tuyère de moteur-fusée pendant une phase de démarrage ou d'arrêt dudit moteur, le dispositif comprenant un moteur-fusée ayant une chambre de combustion dans laquelle des gaz de combustion sont générés, une tuyère reliée à la chambre de combustion dans laquelle se produit un écoulement supersonique des gaz de combustion, et au moins deux ensembles de manoeuvre identiques montés sur la tuyère pour reprendre les efforts latéraux agissant sur celle-ci, chaque ensemble de manoeuvre comprenant :
un premier organe formant tirant dont une première extrémité est articulée sur la tuyère ;
un second organe formant bâti d'ancrage dont une première extrémité est articulée sur la chambre de combustion et une seconde extrémité est articulée sur une seconde extrémité du tirant ; et
un actionneur dont une première extrémité est destinée à être articulée sur une structure fixe de la fusée et une seconde extrémité est articulée sur la seconde extrémité du bâti d'ancrage ;
caractérisé en ce que chaque tirant comprend des moyens lui permettant d'agir comme un tirant rigide tant que les efforts latéraux agissant sur l'actionneur correspondant restent inférieurs à un seuil d'effort déterminé et comme un élément écrêteur d'effort et dissipatif d'énergie cinétique résiduelle dès que les efforts agissant sur l'actionneur dépassent le seuil d'effort déterminé.

Le seuil d'effort est déterminé en fonction de l'effort maximal admissible par l'ensemble de manoeuvre, notamment par son actionneur (formé par exemple par un vérin). En pratique, ce seuil d'effort correspond à un effort mesuré au droit des vérins. L'on comprend ainsi que si les efforts agissant sur les tirants des ensembles de manoeuvre sont inférieurs au seuil d'effort déterminé, les tirants agissent comme de simples bielles rigides. En revanche, lorsque les efforts agissant sur les actionneurs dépassent ce seuil d'effort, les tirants cessent d'agir comme des bielles rigides, limitent la transmission des efforts aux structures et dissipent l'énergie cinétique résiduelle. De la sorte, le dispositif selon l'invention permet de limiter les efforts aux attaches du moteur sur le lanceur pour éviter leur rupture. La sécurité du lanceur et du pas de tir s'en trouve donc améliorée.

De préférence, chaque tirant comprend un élément rigide solidaire des deux extrémités du tirant, un élément déformable longitudinalement sous l'effort en compression ou en extension et solidaire des deux extrémités du tirant, et des moyens pour désolidariser l'élément rigide de l'une au moins des deux extrémités du tirant dès que les efforts agissant sur la tuyère dépassent le seuil d'effort déterminé.

Avantageusement, l'élément déformable du tirant comprend un tube s'étendant selon une direction longitudinale du tirant et présentant une pluralité de fentes circonférentielles. Un tel tube est ainsi apte à subir une déformation plastique en extension ou en compression.

Selon un premier mode de réalisation possible, l'élément rigide du tirant comprend une biellette dont l'une de ses extrémités est fixée directement sur le tirant et l'autre extrémité est fixée sur le tirant au moyen d'une goupille de cisaillement apte à se rompre dès que les efforts agissant sur la tuyère dépassent le seuil d'effort déterminé de façon à désolidariser la biellette de l'une au moins des extrémités du tirant.

Selon un deuxième mode de réalisation possible, l'élément rigide du tirant comprend une enveloppe tubulaire disposée autour du tube déformable, le tirant comprenant en outre des charges pyrotechniques réparties autour de l'enveloppe de façon à pouvoir découper celle-ci selon une direction transversale pour désolidariser l'enveloppe de l'une au moins des extrémités du tirant, lesdites charges explosant dès que les efforts agissant sur la tuyère dépassent le seuil d'effort déterminé.

Selon un troisième mode de réalisation possible, l'élément rigide du tirant comprend au moins une colonne de liaison dont les deux extrémités sont fixées sur le tirant, le tirant comprenant en outre des charges pyrotechniques réparties autour de chaque colonne de façon à pouvoir découper celle-ci selon une direction transversale pour désolidariser la colonne de l'une au moins des extrémités du tirant, lesdites charges explosant dès que les efforts agissant sur la tuyère dépassent le seuil d'effort déterminé.

Avantageusement, les charges pyrotechniques sont déclenchable par un système permettant de mesurer le niveau d'effort dans l'actionneur correspondant en envoyant un ordre d'activer les charges lorsque ce niveau d'effort dépasse ce seuil prédéterminé.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en perspective d'une tuyère de moteur-fusée équipée d'un dispositif pour amortir les efforts latéraux de décollement de jet selon un premier mode de réalisation de l'invention ;
- la figure 2 est une vue en coupe longitudinale selon II-II de la figure 1 ;
- la figure 3 est une vue en perspective montrant un tirant du dispositif des figures 1 et 2 ;
- les figures 4A et 4B sont des vues en coupe longitudinale selon IV-IV de la figure 3 montrant le tirant dans deux états différents ;
- la figure 5 est une vue en perspective montrant un tirant selon un deuxième mode de réalisation de l'invention ;
- les figures 6A et 6B sont des vues en coupe longitudinale selon VI-VI de la figure 5 montrant le tirant dans deux états différents ;
- les figures 7 et 8 sont des vues respectivement en perspective et de côté montrant un tirant selon un troisième mode de réalisation de l'invention ; et
- la figure 9 représente des courbes montrant l'amplitude de l'effort agissant sur la tuyère selon l'invention.

### Description détaillée de modes de réalisation

La présente invention concerne un dispositif pour amortir les efforts latéraux du type comprenant au moins deux ensembles de manoeuvre répartis autour d'une tuyère 10 de moteur-fusée.

Ces ensembles de manoeuvre sont commandés principalement pour orienter le moteur en vol pour les besoins de pilotage du lanceur mais ils peuvent aussi reprendre le niveau d'effort provoqué par des décollements de jet et agissant sur le divergent 12 qui prolonge une chambre de combustion 14 au-delà d'un col de tuyère 16.

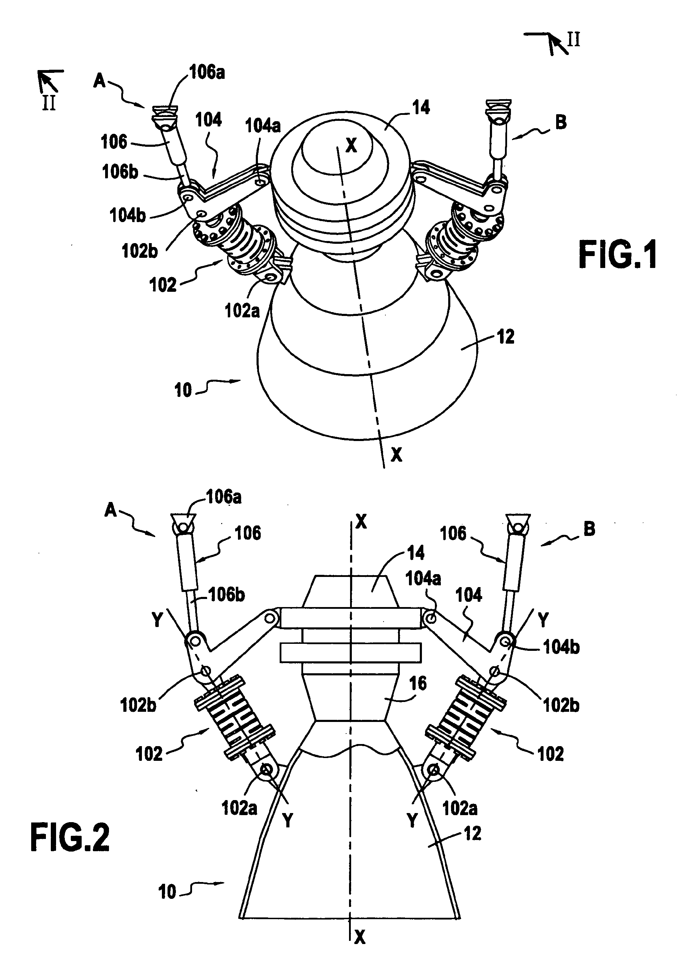

Si l'on considère plus particulièrement le mode de réalisation des figures 1 et 2, on voit que les deux ensembles de manoeuvre A et B sont identiques et montés de façon symétrique autour de l'axe X-X de l'ensemble moteur sur la tuyère 10. Les deux ensembles de manoeuvre sont ainsi disposés de façon à former entre eux des angles voisins de 180°.

Chaque ensemble de manoeuvre A, B comprend un premier organe 102 formant tirant dont une première extrémité 102a est articulée sur le divergent 12 de la tuyère 10, et un second organe 104 formant bâti d'ancrage dont une première extrémité 104a est articulée sur la chambre de combustion 14 du moteur et une seconde extrémité 104b est articulée sur une seconde extrémité 102b du tirant 102 correspondant. Le tirant 102 de chaque ensemble de manoeuvre s'étend longitudinalement selon un axe principal Y-Y qui est incliné par rapport à l'axe X de l'ensemble moteur.

Chaque ensemble de manoeuvre A, B comprend en outre un actionneur 106 ayant une première extrémité 106a qui est destinée à être articulée sur une structure fixe du lanceur (non représentée sur les figures) et une seconde extrémité 106b qui est articulée sur la seconde extrémité 104b du bâti d'ancrage 104 correspondant. Les actionneurs 106 peuvent être constitués de vérins de pilotage de divers types, par exemple de type électrique ou hydraulique.

Le principe général de fonctionnement de ces ensembles de manoeuvre est le suivant. Lorsqu'un phénomène de décollement de jet de forte amplitude apparaît dans la tuyère pendant une phase de démarrage ou d'arrêt au sol du moteur, le déséquilibre des pressions en sortie de tuyère provoque des efforts agissant latéralement sur le divergent. Ces efforts latéraux se décomposent notamment en efforts agissant en traction ou en compression sur les tirants 102 puis sur les vérins de pilotage 106 des ensembles de manoeuvre A, B. En réaction, les vérins de pilotage transmettent au divergent par l'intermédiaire des tirants 102 un effort de sens opposé et de force sensiblement équivalente aux efforts latéraux.

Selon l'invention, chaque tirant 102 des ensembles de manoeuvre comprend des moyens lui permettant d'agir comme un tirant rigide tant que les efforts latéraux agissant sur l'actionneur correspondant restent inférieurs à un seuil d'effort déterminé et comme un élément écrêteur d'effort et dissipatif d'énergie cinétique résiduelle dès que les efforts agissant sur l'actionneur dépassent le seuil d'effort déterminé.

Différents modes de réalisation possibles de ces moyens sont décrits ci-après.

Dans un premier mode de réalisation illustré par les figures 1, 2, 3, 4A et 4B, chaque tirant 102 des ensembles de manoeuvre comprend un tube 108 qui s'étend longitudinalement selon l'axe principal Y-Y du tirant et qui est fixée sur les deux extrémités 102a, 102b de celui-ci.

Le tube 108 présente une pluralité de fentes (ou entailles) circonférentielles 110. Le matériau dans lequel est réalisé le tube, la forme, la répartition et le dimensionnement des fentes sont choisis de sorte que, sous un effort mécanique longitudinal, le tube peut subir une déformation plastique (c'est-à-dire qui ne restitue pas l'énergie absorbée) en compression ou en extension (tel un ressort). L'obtention d'une telle déformation plastique est connue de l'homme de l'art et n'est donc pas détaillée ici.

Chaque tirant 102 comprend en outre une biellette rigide 112 qui s'étend longitudinalement selon l'axe principal Y-Y du tirant et dont l'une de ses extrémités est fixée directement sur (ou confondue avec) l'une des extrémités 102b du tirant et l'autre extrémité est fixée sur l'autre extrémité 102a du tirant au moyen d'une goupille de cisaillement 114. La goupille est dimensionnée de façon à se rompre par cisaillement lorsque l'effort agissant sur le tirant 102 dépasse un seuil d'effort déterminé, ce seuil d'effort étant déterminé en fonction de l'effort maximal admissible par l'ensemble de manoeuvre, notamment par son vérin de pilotage 106.

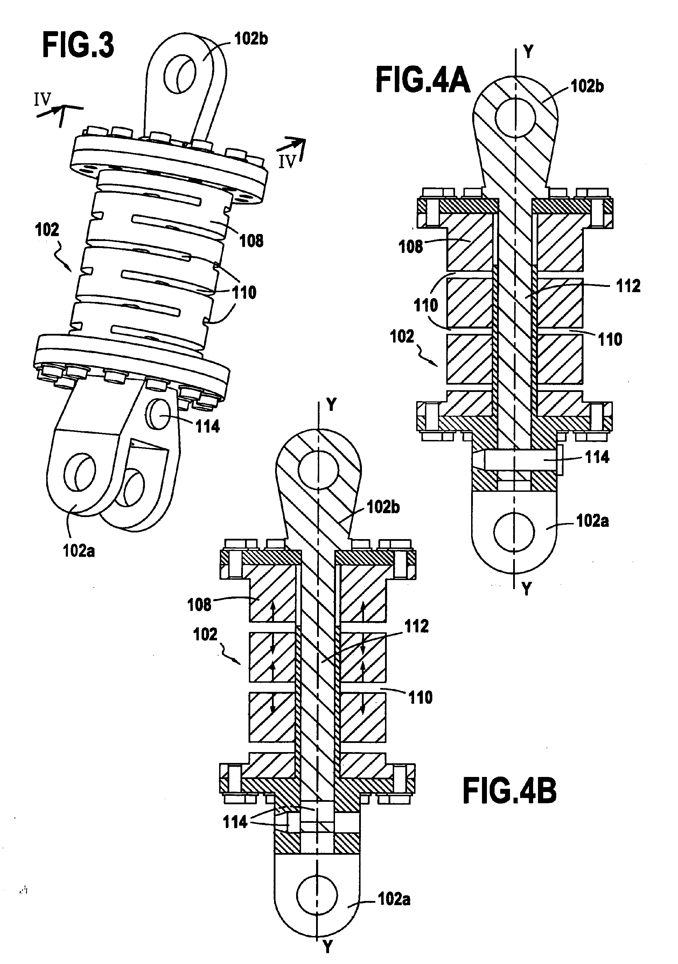

Comme représenté plus précisément sur les figures 4A, 4B, la goupille de cisaillement 114 traverse la biellette 112 selon une direction transversale à celle-ci, ses extrémités étant logées dans des empreintes correspondantes de l'extrémité 102a du tirant 102.

Le principe de fonctionnement du dispositif pour amortir les efforts latéraux de décollement de jet selon ce premier mode de réalisation est le suivant. En cas de phénomène de décollement de jet, chaque tirant 102 - et donc chaque biellette 112 - est soumis à des efforts en traction ou en compression qui s'appliquent selon son axe principal Y-Y. Tant que ces efforts restent inférieurs à un seuil déterminé, la goupille 114 correspondante reste intègre et le dispositif se comporte comme un tirant rigide (figure 4A). Si les efforts dépassent le seuil déterminé, la goupille 114 se rompt par cisaillement entraînant ainsi une désolidarisation de la biellette 112 de l'une des extrémités des tirants 102 (sur l'exemple de la figure 4B, il s'agit de l'extrémité 102a). Il en résulte que les efforts ne se transmettent plus entre les deux extrémités 102a, 102b du tirant par la biellette 112 mais par le tube 108. Ce dernier, sous l'effet des efforts, se déforme en extension ou en compression (sur l'exemple de la figure 4B, le tube 108 subit une déformation plastique en extension comme schématisé par les flèches). La déformation des tubes 108 permet ainsi de limiter les efforts vus par l'actionneur et ses attaches et de dissiper l'énergie cinétique résiduelle du moteur.

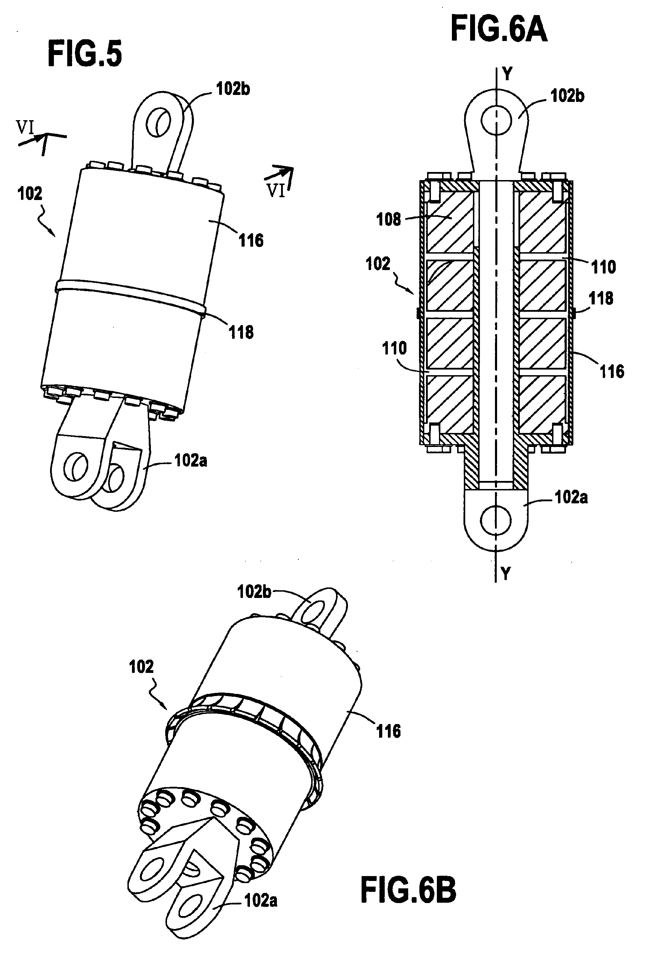

Dans un deuxième mode de réalisation illustré par les figures 5, 6A et 6B, chaque tirant 102 des ensembles de manoeuvre comprend un tube déformable 108 qui s'étend longitudinalement selon l'axe principal Y-Y du tirant et qui est fixée sur les deux extrémités 102a, 102b de celui-ci. Ce tube 108 est identique dans sa forme et sa fonction à celui décrit en liaison avec le premier mode de réalisation.

Chaque tirant 102 comprend en outre une enveloppe (ou coque) tubulaire et rigide 116 qui s'étend longitudinalement selon l'axe principal Y-Y du tirant, est disposée autour du tube déformable 108 et est fixée sur les deux extrémités 102a, 102b du tirant. Une telle enveloppe rigide 116 est réalisée dans un matériau permettant la transmission des efforts et est fixée sur les extrémités du tirant par exemple au moyen de liaisons boulonnées, soudures, etc.

Chaque tirant 102 comprend encore des charges pyrotechniques 118 qui sont intégrées à l'enveloppe 116 et disposées tout autour de l'axe principal Y-Y. A titre d'exemple, ces charges se présentent sous la forme d'un cordon d'explosif comme représenté aux figures 5 et 6A.

La nature, la quantité et la disposition de ces charges pyrotechniques 118 sont choisies de sorte que leur explosion entraîne une découpe complète de l'enveloppe rigide 116 dans le sens transversal. Ces critères dépendent notamment du matériau constituant l'enveloppe 116, de ses dimensions, de son épaisseur, etc.

Par ailleurs, les charges pyrotechniques 118 explosent lorsque l'effort agissant sur le tirant - et donc sur l'enveloppe 116 - dépasse le seuil d'effort déterminé. A titre d'exemple, le déclenchement de l'explosion des charges s'effectue par un système (non représenté sur les figures) appartenant au lanceur et permettant de mesurer le niveau d'effort dans l'actionneur en envoyant un ordre d'activer ces charges lorsque ce niveau d'effort dépasse ce seuil prédéterminé.

Le principe de fonctionnement du dispositif pour amortir les efforts latéraux de décollement de jet selon ce deuxième mode de réalisation est le suivant. En cas de phénomène de décollement de jet, chaque tirant 102 - et donc chaque enveloppe rigide 116 - est soumis à des efforts en traction ou en compression qui s'appliquent selon son axe principal Y-Y. Tant que ces efforts restent inférieurs à un seuil déterminé, les charges pyrotechniques 118 n'explosent pas et le dispositif se comporte comme un tirant rigide (figure 6A). Si les efforts dépassent le seuil déterminé, les charges pyrotechniques 118 explosent entraînant ainsi une séparation de l'enveloppe rigide 116 en deux parties (sur l'exemple de la figure 6B, la découpe de l'enveloppe rigide désolidarise les deux extrémités 102a et 102b du tirant qui ne sont alors plus retenues que par l'élément dissipatif 108). Plus précisément, l'explosion des charges pyrotechniques provoque une découpe de l'enveloppe 116, les deux parties de celle-ci pouvant s'écarter l'une de l'autre (en cas d'effort en traction subi par le tirant) ou se chevaucher comme représenté sur la figure 6B (en cas d'effort en compression subi par le tirant). Il en résulte que les efforts ne se transmettent plus entre les deux extrémités 102a, 102b du tirant par l'enveloppe 116 mais par le tube 108. Ce dernier, sous l'effet des efforts, se déforme en extension ou en compression comme expliqué précédemment.

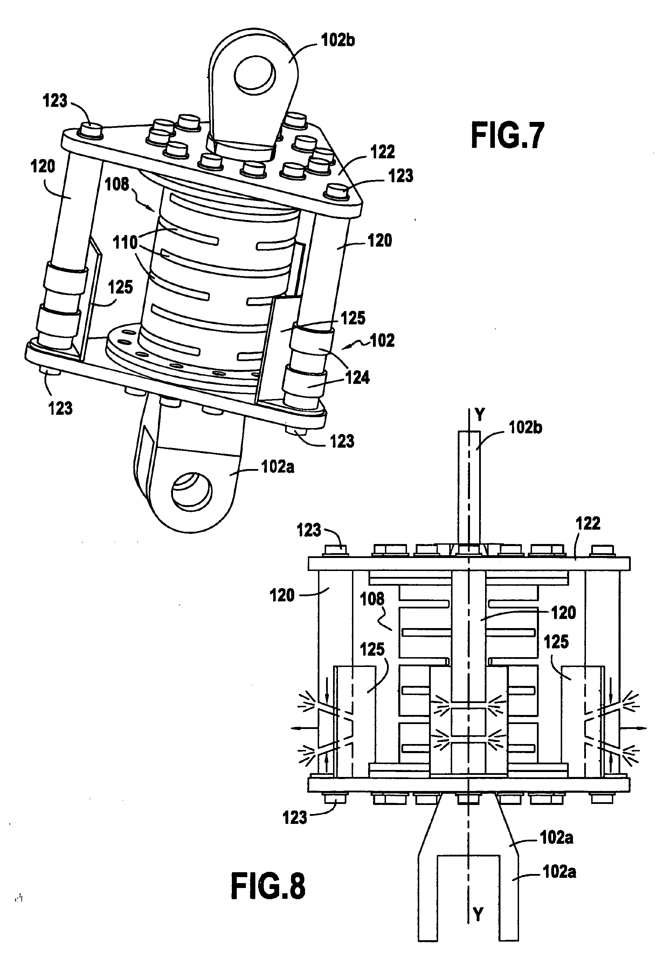

Dans un troisième mode de réalisation illustré par les figures 6 et 7, chaque tirant 102 des ensembles de manoeuvre comprend un tube déformable 108 qui s'étend longitudinalement selon l'axe principal Y-Y du tirant et qui est fixée sur les deux extrémités 102a, 102b du tirant. Ce tube 108 est identique dans sa forme et sa fonction à celui décrit en liaison avec le premier mode de réalisation.

Chaque tirant 102 comprend en outre au moins une colonne de liaison rigide 120 qui s'étend longitudinalement selon l'axe Y-Y du tirant et qui est fixée à ses deux extrémités sur les extrémités 102a, 102b correspondantes du tirant (par exemple, les colonnes de liaison 120 sont fixées sur des plaques transversales 122 au moyen de vis 123). Sur l'exemple de réalisation des figures 6 et 7, les colonnes de liaison 120 sont au nombre de trois et sont régulièrement disposées autour de l'axe Y-Y du tirant. Elles sont par exemple réalisées dans un matériau permettant la transmission des efforts.

Chaque tirant 102 comprend en outre des charges pyrotechniques 124 qui sont intégrées aux colonnes rigides 120 et disposées autour de leur axe longitudinal respectif. A titre d'exemple, ces charges 124 se présentent sous la forme de deux cordons d'explosif comme représenté sur les figures 7 et 8.

La nature, la quantité et la disposition des charges pyrotechniques 124 sont choisies de sorte que leur explosion entraîne une découpe transversale de chaque colonne rigide 120. Ces critères dépendent notamment du matériau constituant les colonnes 120, de leurs dimensions, de leur épaisseur, etc.

Par ailleurs, les charges pyrotechniques 124 explosent lorsque l'effort agissant sur le tirant - et donc sur les colonnes de liaison 120 - dépasse le seuil d'effort déterminé. A titre d'exemple, le déclenchement de l'explosion des charges s'effectue par un système appartenant au lanceur et permettant de mesurer le niveau d'effort dans l'actionneur en envoyant un ordre d'activer ces charges lorsque ce niveau d'effort dépasse ce seuil prédéterminé.

En outre, des plaques 125 formant déflecteurs peuvent être interposées entre les colonnes de liaison 120 et le tube 108 afin d'éviter que l'explosion des charges pyrotechniques 124 ne vienne endommager ce tube.

Le principe de fonctionnement du dispositif pour amortir les efforts latéraux de décollement de jet selon ce troisième mode de réalisation est le suivant. En cas de phénomène de décollement de jet, chaque tirant 102 - et donc chaque colonne de liaison rigide 120 - est soumis à des efforts en traction ou en compression qui s'appliquent selon son axe principal Y-Y. Tant que ces efforts restent inférieurs à un seuil déterminé, les charges pyrotechniques 124 n'explosent pas et le dispositif se comporte comme un tirant rigide (figure 7). Si les efforts dépassent le seuil déterminé, les charges pyrotechniques 124 explosent entraînant ainsi une désolidarisation des colonnes de liaison 120 de l'une au moins des extrémités du tirant 102 (sur l'exemple de la figure 8, les colonnes rigides se désolidarisent des deux extrémités 102a et 102b du tirant). Plus précisément, l'explosion des charges pyrotechniques provoque un sectionnement des colonnes de liaison 120 en plusieurs morceaux. Le sectionnement est réalisé de telle sorte que les morceaux centraux sont expulsés latéralement en cas de compression du tirant (le sectionnement se fait selon une découpe inclinée comme représenté sur la figure 8). Il en résulte que les efforts ne se transmettent plus entre les deux extrémités 102a, 102b du tirant par les colonnes de liaison 120 mais par le tube 108. Ce dernier, sous l'effet des efforts, se déforme en extension ou en compression comme expliqué précédemment.

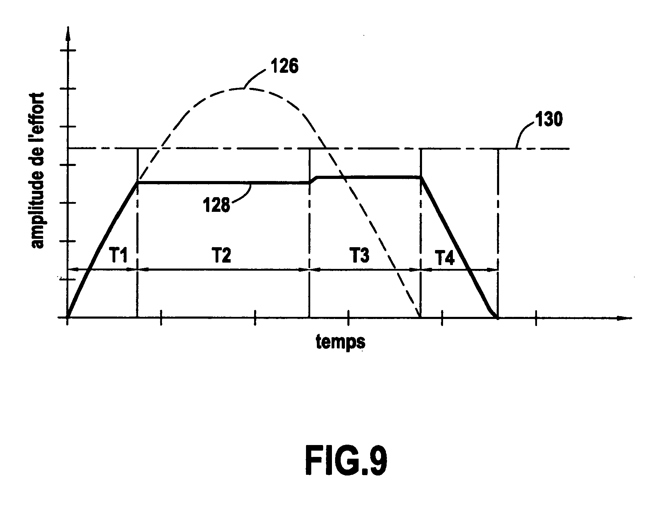

En liaison avec la figure 9, on décrira maintenant l'effet obtenu par l'utilisation d'un dispositif pour amortir les efforts latéraux de décollement de jet selon l'invention.

Sur cette figure, la courbe 126 représente en fonction du temps l'amplitude des efforts latéraux agissant sur une tuyère de l'art antérieur (c'est-à-dire dépourvue de dispositif selon l'invention). Par opposition, la courbe 128 représente l'amplitude des efforts latéraux agissant sur une tuyère selon l'invention. Quant à la ligne horizontale 130, elle schématise l'effort (ou la charge) maximale admissible par la structure du lanceur et les vérins des ensembles de manoeuvre du dispositif selon l'invention.

Différentes phases sont illustrées par ces courbes. Dans un premier temps T1, l'effort latéral exercé par la tuyère est repris par les actionneurs des ensembles de manoeuvre. Dans un deuxième temps T2 débutant à partir d'un certain niveau d'effort, un dispositif intrinsèque à l'actionneur de l'ensemble de manoeuvre concerné écrête l'effort transmis aux structures en permettant la rotation du moteur et la transformation de l'énergie du décollement de jet en énergie cinétique. Dans cette phase, le dispositif selon l'invention se comporte comme un tirant rigide. Dans un troisième temps T3 (si le décollement de jet persiste en amplitude et en direction), la course maximale de l'actionneur est atteinte et celui-ci vient en butée. L'écrêtage produit par l'actionneur cesse et l'effort transmis aux structures se remet à augmenter jusqu'à atteindre le seuil d'effort déterminé pour lequel les goupilles des tirants se rompent (premier mode de réalisation) ou pour lequel les charges pyrotechniques explosent (deuxième et troisième modes de réalisation). Au cours de cette phase, le dispositif selon l'invention agit comme un écrêteur d'efforts en transformant l'énergie cinétique en énergie élastique de déformation puis en énergie plastique de déformation. Enfin, dans un quatrième et dernier temps T4, l'énergie élastique de déformation est restituée jusqu'à annulation de l'effort.

## Revendications

1. Dispositif pour amortir les efforts latéraux de décollement de jet agissant sur une tuyère de moteur-fusée pendant une phase de démarrage ou d'arrêt dudit moteur, le dispositif comprenant un moteur-fusée ayant une chambre de combustion (14) dans laquelle des gaz de combustion sont générés, une tuyère (10) reliée à la chambre de combustion dans laquelle se produit un écoulement supersonique des gaz de combustion, et au moins deux ensembles de manoeuvre (A, B) identiques montés sur la tuyère pour reprendre les efforts latéraux agissant sur celle-ci, chaque ensemble de manoeuvre comprenant :
un premier organe (102) formant tirant dont une première extrémité (102a) est articulée sur la tuyère ;
un second organe (104) formant bâti d'ancrage dont une première extrémité (104a) est articulée sur la chambre de combustion et une seconde extrémité (104b) est articulée sur une seconde extrémité (102b) du tirant ; et
un actionneur (106) dont une première extrémité (106a) est destinée à être articulée sur une structure fixe de la fusée et une seconde extrémité (106b) est articulée sur la seconde extrémité du bâti d'ancrage ;
**caractérisé en ce que** chaque tirant (102) comprend :
un élément rigide (112, 116, 120) solidaire des deux extrémités (102a, 102b) du tirant ;
un élément déformable (108) longitudinalement sous l'effort en compression ou en extension, solidaire des deux extrémités du tirant, et comprenant un tube s'étendant selon une direction longitudinale (Y-Y) du tirant et présentant une pluralité de fentes (110) circonférentielles ; et
des moyens (114, 118, 124) pour désolidariser l'élément rigide de l'une au moins des deux extrémités du tirant lorsque les efforts latéraux agissant sur l'actionneur correspondant dépassent un seuil d'effort déterminé de telle sorte que le tirant agit comme un tirant rigide tant que les efforts latéraux agissant sur l'actionneur restent inférieurs au seuil d'effort déterminé et comme un élément écrêteur d'effort et dissipatif d'énergie cinétique résiduelle dès que les efforts agissant sur l'actionneur dépassent le seuil d'effort déterminé.

2. Dispositif selon la revendication 1, dans lequel l'élément rigide du tirant (102) comprend une biellette (112) dont l'une de ses extrémités est fixée directement sur le tirant et l'autre extrémité est fixée sur le tirant au moyen d'une goupille de cisaillement (114) apte à se rompre dès que les efforts agissant sur la tuyère dépassent le seuil d'effort déterminé de façon à désolidariser la biellette de l'une au moins des extrémités (102a, 102b) du tirant.

3. Dispositif selon la revendication 2, dans lequel la goupille de cisaillement (114) traverse la biellette (112) selon une direction transversale à celle-ci, ses extrémités étant logées dans des empreintes correspondantes du tirant (102).

4. Dispositif selon la revendication 1, dans lequel l'élément rigide du tirant (102) comprend une enveloppe tubulaire (116) disposée autour du tube déformable (108), le tirant comprenant en outre des charges pyrotechniques (118) réparties autour de l'enveloppe de façon à pouvoir découper celle-ci selon une direction transversale pour désolidariser l'enveloppe de l'une au moins des extrémités (102a, 102b) du tirant, lesdites charges explosant dès que les efforts agissant sur la tuyère dépassent le seuil d'effort déterminé.

5. Dispositif selon la revendication 1, dans lequel l'élément rigide du tirant (102) comprend au moins une colonne de liaison (120) dont les deux extrémités sont fixées sur le tirant, le tirant comprenant en outre des charges pyrotechniques (124) réparties autour de chaque colonne de façon à pouvoir découper celle-ci selon une direction transversale pour désolidariser la colonne de l'une au moins des extrémités (102a, 102b) du tirant, lesdites charges explosant dès que les efforts agissant sur la tuyère dépassent le seuil d'effort déterminé.

6. Dispositif selon l'une des revendications 4 et 5, dans lequel les charges pyrotechniques (118, 124) sont déclenchable par un système permettant de mesurer le niveau d'effort dans l'actionneur correspondant en envoyant un ordre d'activer les charges lorsque ce niveau d'effort dépasse ce seuil prédéterminé.

## Claims

1. A device for damping the lateral forces due to jet separation acting on a rocket engine nozzle during a stage of said engine being started or stopped, the device comprising an engine having a combustion chamber (14) in which combustion gas is generated, a nozzle (10) connected to the combustion chamber in which a supersonic flow of combustion gas occurs, and at least two identical drive assemblies (A, B) mounted on the nozzle in order to take up the lateral forces acting thereon, each drive assembly comprising:
· a first member (102) forming a strut having a first end (102a) hinged to the nozzle;
· a second member (104) forming an anchor structure with a first end (104a) hinged to the combustion chamber and a second end (104b) hinged to a second end (102b) of the strut; and
· an actuator (106) having a first end (106a) for hinging to a stationary structure of the rocket and a second end (106b) hinged to the second end of the anchor structure;
the device being **characterized in that** each strut (102) comprises:
· a rigid element (112, 116, 120) secured to both ends (102a, 102b) of the strut;
· an element (108) that is longitudinally deformable under compression or extension force, secured to both ends of the strut, and comprising a tube extending in a said longitudinal direction (Y-Y) of the strut and presenting a plurality of circumferential slots (110); and
· means (14, 118, 124) for separating the rigid element from at least one of the two ends of the strut when the lateral forces acting on the corresponding actuator exceed a determined force threshold such that the strut acts as a rigid strut so long as the lateral forces acting on the actuator remain below the determined force threshold, and as an element for peak limiting force and for dissipating residual kinetic energy once the forces acting on the actuator exceed the determined force threshold.

2. A device according to claim 1, wherein the rigid element of the strut (102) comprises a connecting rod (112) having one of its ends fastened directly to the strut and having its other end fastened to the strut by means of a shear pin (114) suitable for breaking once the forces acting on the nozzle exceed the determined force threshold so as to separate the connecting rod from at least one of the ends (102a, 102b) of the strut.

3. A device according to claim 2, wherein the shear pin (114) passes through the connecting rod (112) in a transverse direction thereof, the ends of the pin being housed in corresponding recesses of the strut (102).

4. A device according to claim 1, wherein the rigid element of the strut (102) comprises a tubular cover (116) disposed around the deformable tube (108), the strut further comprising pyrotechnic charges (118) distributed around the cover so as to be capable of cutting it in a transverse direction to separate the cover from at least one of the ends (102a, 102b) of the strut, said charges exploding once the forces acting on the nozzle exceed the determined force threshold.

5. A device according to claim 1, wherein the rigid element of the strut (102) comprises at least one link column (120) having its two ends fastened to the strut, the strut further including pyrotechnic charges (124) distributed around each column so as to enable it to be cut in a transverse direction to separate the column from at least one of the ends (102a, 102b) of the strut, said charges exploding once the forces acting on the nozzle exceed the determined force threshold.

6. A device according to claim 4 or claim 5, wherein the pyrotechnic charges (118, 124) are able to be triggered by a system serving to measure the level of force in the corresponding actuator and delivering an order to activate the charges when said force level exceeds the predetermined threshold.

## Patentansprüche

1. Vorrichtung zur Dämpfung der seitlichen Strahlablösungskräfte, die auf eine Düse eines Raketentriebwerks während einer Start- oder Abschaltphase des Triebwerks wirken, wobei die Vorrichtung ein Raketentriebwerk, das eine Brennkammer (14), in der Verbrennungsgase erzeugt werden, eine mit der Brennkammer verbundene Düse (10), in der eine Überschallströmung der Verbrennungsgase stattfindet, aufweist, sowie wenigstens zwei identische Betätigungsanordnungen (A, B), die an der Düse angebracht sind, um die auf diese wirkenden seitlichen Kräfte aufzunehmen, umfaßt, wobei jede Betätigungsanordnung umfaßt:
ein eine Strebe bildendes erstes Organ (102), von dem ein erstes Ende (102a) an der Düse angelenkt ist,
ein einen Verankerungsrahmen bildendes zweites Organ (104), von dem ein erstes Ende (1 04a) an der Brennkammer angelenkt ist und ein zweites Ende (1 04b) an einem zweiten Ende (102b) der Strebe angelenkt ist, und
ein Betätigungsglied (106), von dem ein erstes Ende (1 06a) dazu bestimmt ist, an einer festen Struktur der Rakete angelenkt zu werden, und ein zweites Ende (106b) an dem zweiten Ende des Verankerungsrahmens angelenkt ist,
**dadurch gekennzeichnet, daß** jede Strebe (102) umfaßt:
ein starres Element (112, 116, 120), das mit den beiden Enden (102a, 102b) der Strebe fest verbunden ist,
ein unter der Druck- oder Dehnungskraft längs verformbares Element (108), das mit den beiden Enden der Strebe fest verbunden ist und das ein Rohr umfaßt, welches in einer Längsrichtung (Y-Y) der Strebe verläuft und eine Vielzahl von umlaufenden Schlitzen (110) aufweist, und
Mittel (114, 118, 124) zum Trennen des starren Elements von wenigstens einem der beiden Enden der Strebe, wenn die auf das entsprechende Betätigungsglied wirkenden seitlichen Kräfte eine bestimmte Kraftschwelle überschreiten, so daß die Strebe wie eine starre Strebe wirkt, solange die auf das Betätigungsglied wirkenden seitlichen Kräfte die bestimmte Kraftschwelle unterschreiten, und als ein Element zur Kraftbegrenzung und zur Aufnahme von restlicher kinetischer Energie, sobald die auf das Betätigungsglied wirkenden Kräfte die bestimmte Kraftschwelle überschreiten.

2. Vorrichtung nach Anspruch 1, wobei das starre Element der Strebe (102) eine Stange (112) umfaßt, deren eines Ende direkt an der Strebe befestigt ist und das andere Ende mittels eines Scherstiftes (114) an der Strebe befestigt ist, welcher geeignet ist, zu brechen, sobald die auf die Düse wirkenden Kräfte die bestimmte Kraftschwelle überschreiten, so daß die Stange von wenigstens einem der Enden (102a, 102b) der Strebe getrennt wird.

3. Vorrichtung nach Anspruch 2, wobei der Scherstift (114) die Stange (112) in einer Querrichtung zu dieser durchgreift, wobei seine Enden in entsprechenden Vertiefungen der Strebe (102) aufgenommen sind.

4. Vorrichtung nach Anspruch 1, wobei das starre Element der Strebe (102) einen rohrförmigen Mantel (116), der um das verformbare Rohr (108) herum angeordnet ist, umfaßt, wobei die Strebe ferner pyrotechnische Ladungen (118) umfaßt, die um den Mantel herum verteilt sind, so daß dieser in einer Querrichtung durchtrennt werden kann, um den Mantel von wenigstens einem der Enden (102a, 102b) der Strebe zu trennen, wobei die Ladungen explodieren, sobald die auf die Düse wirkenden Kräfte die bestimmte Kraftschwelle überschreiten.

5. Vorrichtung nach Anspruch 1, wobei das starre Element der Strebe (102) wenigstens eine Verbindungssäule (120) umfaßt, deren beide Enden an der Strebe befestigt sind, wobei die Strebe ferner pyrotechnische Ladungen (124) umfaßt, die um jede Säule herum verteilt sind, so daß diese in einer Querrichtung durchtrennt werden kann, um die Säule von wenigstens einem der Enden (102a, 102b) der Strebe zu trennen, wobei die Ladungen explodieren, sobald die auf die Düse wirkenden Kräfte die bestimmte Kraftschwelle überschreiten.

6. Vorrichtung nach einem der Ansprüche 4 und 5, wobei die pyrotechnischen Ladungen (118, 124) über ein System, das ermöglicht, den Kraftpegel in dem entsprechenden Betätigungsglied zu messen, auslösbar sind, indem ein Befehl zur Aktivierung der Ladungen ausgegeben wird, wenn dieser Kraftpegel diese vorbestimmte Schwelle überschreitet.
